# EUROPEAN PATENT SPECIFICATION

(11) **EP 1 394 394 B1**
(45) Date of publication and mention of the grant of the patent: **24.10.2012**
(21) Application number: 03019308.0
(22) Date of filing: 26.08.2003
(51) Int. Cl.: F02D 41/00, F02D 29/02

(54) **Engine torque control apparatus**
Motormomentsteuerungsvorrichtung
Système de commande du couple de moteur

(30) Priority: 30.08.2002 JP 2002254059
(43) Date of publication of application: 03.03.2004
(73) Proprietor: JATCO Ltd, Fuji-shi, Shizuoka (JP)
(72) Inventor: Kang, Jihoon, c/o Jatco Ltd., Fuji-shi, Shizuoka (JP); Kawamura, Yasutaka, c/o Jatco Ltd., Fuji-shi, Shizuoka (JP)
(74) Representative: Hoefer & Partner

(56) References cited:
- EP-A- 1 091 152
- US-A- 5 876 301
- US-A- 6 146 309
- US-A1- 2002 082 764

## Description

### FIELD OF THE INVENTION

This invention relates to a control apparatus for controlling the output torque of an engine to a transmission system for transmitting the driving force of the engine to a driving wheel.

### BACKGROUND OF THE INVENTION

A belt CVT (Continuously Variable Transmission) is known as a change gear installed in automobiles. A belt CVT comprises a primary pulley for inputting the driving force of the engine, a secondary pulley for outputting the driving force to the driving wheel, and a V-belt wound around the primary pulley and secondary pulley for transmitting the driving force inputted from the primary pulley to the secondary pulley. The pulley width of the primary pulley and the secondary pulley can be varied by the oil pressure supplied to the primary pulley and secondary pulley. When changing gears, oil pressure supplied to the primary pulley and secondary pulley adjusts the pulley width and thus to vary the ratio (pulley ratio) of the contact radius (effective radius) in relation to the primary pulley and secondary pulley of the V-belt. Thus, the ratio of rotation speed (gear ratio) between input and output is adjusted.

It is important that belt slippage does not occur in the belt CVT in order to prevent reduction in belt durability. Belt slippage can be prevented by increasing the oil pressure supplied to the primary pulley and secondary pulley to thereby increase the force at which the primary pulley and secondary pulley hold the V-belt.

In cold climates, it is not uncommon for the temperature of the oil supplied to the primary pulley and secondary pulley to fall below -20°C while the automobile is parked. Under such conditions, since the pressure of the oil supplied to the primary pulley and secondary pulley does not rise due to the increased oil viscosity, it is possible that the force for holding the V-belt between the two pulleys will be insufficient and that belt slippage will occur. In such cases, the prior art prevents the torque from increasing by limiting the engine output torque, which results in prevention of belt slippage.

Further, in regions of extreme cold, oil temperature may fall to very low levels (for example -40 to -50°C), causing the viscosity of the oil to become extremely high. Conventionally in such a case, neither control for limiting engine output nor control of the transmission gear ratio is performed and a constant gear ratio is maintained. Control for limiting engine output and control of the gear ratio are begun when a temperature (around -35°C, for example) at which the viscosity of the oil decreases to a certain extent is reached.
EP 1 091 152 A1 discloses a slip preventing control of toroidal continuously variable transmission wherein a temperature sensor detects a temperature of oil supplied to the transmission and a controller suppresses an output torque of the engine when the temperature of the oil is lower than a predetermined temperature.

### SUMMARY OF THE INVENTION

However, if engine output is large, for example, when control for limiting engine output is begun conventionally, limitation of the engine output is sudden and a large shock may be produced.

An object of this invention is to enable a vehicle to run smoothly in extremely low temperatures without producing great shocks even at these low temperatures.
According to the invention, the object is solved by the features of the independent claims. The sub-claims contain further preferred developments of the invention.

In order to achieve the above object, this invention provides an engine torque control apparatus for controlling an output torque of an engine which is connected to a vehicle transmission. The engine torque control apparatus comprises a temperature sensor for detecting a temperature of oil supplied to the transmission and a controller for limiting the output torque of the engine to an engine torque limit or less, the controller being linked to the temperature sensor. The controller functions to compare the oil temperature with a predetermined temperature; set the engine torque limit to a first limiting value when the oil temperature is equal to or lower than the predetermined temperature; and reduce the engine torque limit at a predetermined reduction rate when the oil temperature is higher than the predetermined temperature.

Further, this invention provides a control method for controlling an output torque of an engine which is connected to a vehicle transmission. The control method comprises the steps of detecting a temperature of oil supplied to the transmission; comparing the oil temperature with a predetermined temperature; setting the engine torque limit to a first limiting value when the oil temperature is equal to or lower than the predetermined temperature; reducing the engine torque limit at a predetermined reduction rate when the oil temperature is higher than the predetermined temperature; and limiting the output torque of the engine to the engine torque limit or less.

The details as well as other features and advantages of this invention are set forth in the remainder of the specification and are shown in the accompanying drawings.

### BRIEF DESCRIPTION OF THE DRAWINGS

Fig. 1 is a schematic structural diagram showing a control apparatus for controlling the engine torque to a transmission system for a vehicle according to the first embodiment.
Fig. 2 is a map showing the relationship between the engine rotation speed and target engine torque ***tTe*** at each quantity of accelerator pedal travel (throttle valve opening).
Fig. 3 is a flow chart showing the control executed by the engine torque control apparatus according to the first embodiment.
Fig. 4A is a graph showing the temporal change in engine torque limit and the temporal change in engine torque according to the first embodiment, and Fig. 4B is a graph showing the temporal change in oil temperature.
Fig. 5A is a graph showing the temporal change in engine torque limit and the temporal change in engine torque according to conventional art, and Fig. 5B is a graph showing the temporal change in oil temperature.

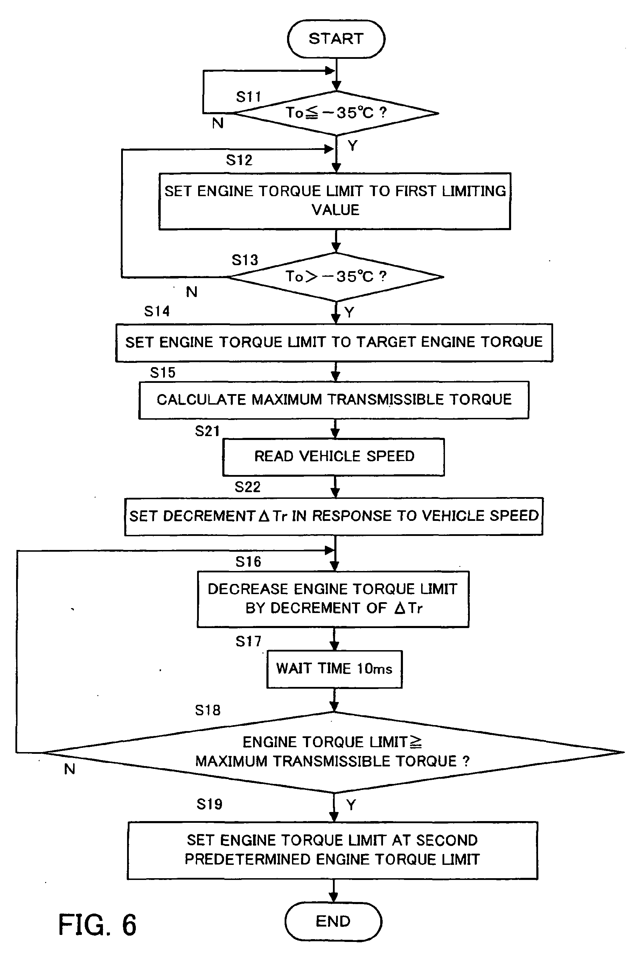

Fig. 6 is a flow chart showing the control executed by the engine torque control apparatus according to the second embodiment.
Fig. 7A is a graph showing the temporal change in engine torque limit and the temporal change in engine torque according to the second embodiment, and Fig. 7B is a graph showing the temporal change in oil temperature.

### DESCRIPTION OF THE PREFERRED EMBODIMENTS

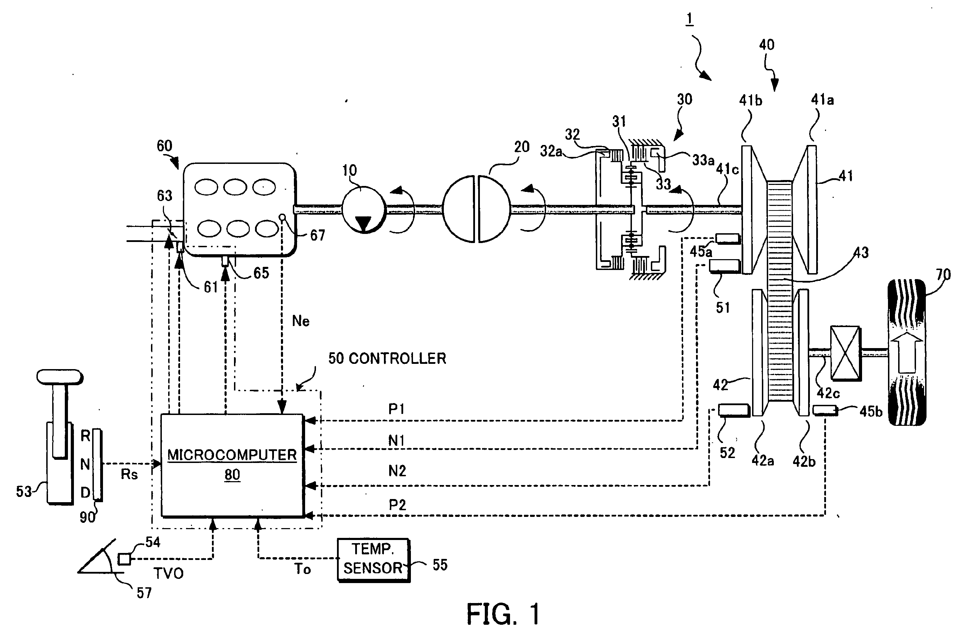

The first embodiment will be described with reference to Fig. 1 through Fig. 4.

Fig. 1 shows a control apparatus for controlling the engine torque inputted to a transmission system for a vehicle. The transmission system 1 comprises a pump 10, a torque converter 20, a forward-reverse switching apparatus 30, and a transmission 40. The transmission system 1 converts the torque outputted from an engine 60 and transmits it to a driving wheel 70.

The controller 50 for controlling the engine 60 comprises a microcomputer 80, a fuel injector 61 for injecting fuel into the engine 60, a throttle valve 63 for controlling the air intake of the engine 60, and an ignition apparatus 65 for igniting the fuel. The fuel injector 61, the throttle valve 63, and the ignition apparatus 65 are capable of operating according to command signals from the microcomputer 80.

The microcomputer 80 has a central processing unit (CPU) for running programs, read-only memory (ROM) for storing programs and data, random access memory (RAM) for temporarily storing data acquired as computing results from the CPU, and an input/output interface (I/O interface). The controller 50 may comprise a plurality of microcomputers.

The controller 50 controls the engine torque ***Te*** and the engine rotation speed ***Ne*** by adjusting the quantity of fuel injected by the fuel injector 61, the opening of the throttle valve, or the ignition timing of the ignition apparatus 65, or a plurality of thereof. The engine rotation speed ***Ne*** is detected by an engine revolution sensor 67. An accelerator pedal sensor 54 detects the travel (depression amount) of an accelerator pedal 57. Usually the throttle valve opening ***TVO*** corresponds to the accelerator pedal travel. Therefore, an accelerator pedal sensor 54 indirectly detects the throttle valve opening ***TVO.*** Of course, a sensor that directly detects the throttle valve opening may also be provided.

A shift lever 53 is used so that the user can change the operating range of the transmission system. The operating range of the transmission system includes at least a drive range (D range) for moving the vehicle forward, a reverse range (R range) for moving the vehicle backward, and a neutral range (N range) or a parking range (P range) for stopping the vehicle.

The pump 10 is driven by the revolutions of the engine 60 and is designed to pump oil. The pressure of the pumped oil is adjusted, after which the oil is sent to the forward-reverse switching apparatus 30 and the transmission 40, and is utilized in forward-reverse switching and gear shifting. The oil pressure is adjusted by a pressure regulating valve (not shown).

The torque converter 20 is provided between the engine 60 and the forward-reverse switching apparatus 30, and the drive force of the engine 60 is transmitted by the current of the oil inside the torque converter 20.

The forward-reverse switching apparatus 30 has a planetary gear set 31 for changing the power transmission path between the engine and the transmission, a forward clutch board 32, and a reverse clutch board 33. The forward clutch board 32 is joined to a forward clutch piston, and is connected to the planetary gear set 31 by the force of the oil pressure (forward clutch pressure) supplied to a forward clutch piston chamber 32a in the D range. The reverse clutch board 33 is joined to a reverse clutch piston, and is connected to the planetary gear set 31 by the force of the oil pressure (reverse clutch pressure) supplied to a reverse clutch piston chamber 33a in. the R range. In the N range and P range, oil is not supplied and the forward clutch board 32 and reverse clutch board 33 are released together. When the forward clutch board 32 is connected to the planetary gear set 31, forward revolutions are outputted to an input shaft 41c of a primary pulley 41. When the reverse clutch board 33 is connected to the planetary gear set 31, reverse revolutions are outputted to the input shaft 41c of the primary pulley 41.

A direction control valve (not shown) for controlling the supply direction of the oil selects the engagement of the forward clutch board 32 or the reverse clutch board 33. The direction control valve switches the supply direction of the oil between the direction toward the forward clutch piston chamber 32a and the direction toward the reverse clutch piston chamber 33a. When the vehicle is moving forward (namely, when in the D range), in addition to supplying forward clutch pressure and connecting the forward clutch board 32, the reverse clutch board 33 is released by releasing the reverse clutch pressure into a drain. When the vehicle is in reverse (namely, when in the R range), in addition to releasing the forward clutch board 32 by releasing the forward clutch pressure into a drain, the reverse clutch pressure is supplied and the reverse clutch board 33 is connected. When the vehicle is stopped (namely, in the N range or P range), the forward clutch board 32 and the reverse clutch board 33 are released together by releasing the forward clutch pressure and the reverse clutch pressure into a drain. In this case, the direction control valve is in the middle position, and oil is not supplied to the forward clutch piston chamber 32a or the reverse clutch piston chamber 33a.

In the present embodiment, the transmission 40 is a belt CVT but is not limited thereto. Such a transmission 40 comprises a primary pulley 41, a secondary pulley 42, and a V-belt 43.

The primary pulley 41 is an input pulley in which the driving force of the engine 60 is inputted. The primary pulley 41 comprises a fixed conical plate 41a that rotates in unison with the input shaft 41c and a movable conical plate 41b capable of being displaced. A V-shaped pulley groove is formed between the fixed conical plate 41a and the movable conical plate 41b, and the V-shaped V-belt 43 is disposed in the pulley groove. The movable conical plate 41b is displaced in the input shaft direction by the oil pressure acting on the primary pulley 41 (hereinafter referred to as "primary pressure"). The revolution speed ***N1*** of the primary pulley 41 is detected by a revolution speed sensor 51 for the primary pulley.

The secondary pulley 42 transmits the driving force transmitted by the V-belt 43 to the driving wheel 70 via an idler gear or a differential gear. The secondary pulley 42 comprises a fixed conical plate 42a that rotates in unison with an output shaft 42c, and a movable conical plate 42b capable of being displaced. A V-shaped pulley groove is formed between the fixed conical plate 42a and the movable conical plate 42b, and the V-belt 43 is disposed in the pulley groove. The movable conical plate 42b is displaced in the output shaft direction in response to the oil pressure acting on the secondary pulley (hereinafter referred to as "secondary pressure"). The pressurized area of the secondary pulley and the pressurized area of the primary pulley are equal or nearly equal. The revolution speed of the secondary pulley 42 is detected by a revolution speed sensor 52 for the secondary pulley. The speed of the vehicle is calculated from the revolution speed ***N2*** of the secondary pulley 42.

The V-belt 43 is wound around the primary pulley 41 and secondary pulley 42, and transmits the driving force inputted by the primary pulley 41 to the secondary pulley 42.

The controller 50 calculates the speed ratio **(*N1*/*N2)*** of the transmission 40 based on signals from the revolution speed sensor 51 for the primary pulley and the revolution speed sensor 52 for the secondary pulley. The maximum transmittable torque of the transmission 40 is calculated based on the speed ratio and a secondary oil pressure signal ***P2*** from an oil pressure sensor 45b, referring to a map (not shown) which associates the maximum transmittable torque with the speed ratio and the secondary oil pressure. The transmission 40 can transmit the torque less than the maximum transmittable torque without a slip of the V-belt 43.

The controller 50 also controls the direction control valve (not shown) and controls the supply of oil to the forward clutch piston chamber 32a and the reverse clutch piston chamber 33a; in other words, adjusts the forward clutch pressure and the reverse clutch pressure, thereby controlling the connected state of the clutch. Furthermore, when the forward clutch board 32 and the reverse clutch board 33 change from a released state to a connected state in relation to the planetary gear set 31, the controller 50 rapidly fills oil into the forward clutch piston chamber 32a or the reverse clutch piston chamber 33a via the direction control valve, quickly increasing the forward or reverse clutch pressure up to the connection pressure which is required to connect the clutch.

Furthermore, the controller 50 reads the revolution speed ***N1*** of the primary pulley and the revolution speed ***N2*** of the secondary pulley and computes the speed ratio ***(N1*/*N2),*** which is the ratio of the rotation speed ***N1*** of the primary pulley to the rotation speed ***N2*** of the secondary pulley. The controller 50 reads the range signal ***Rs*** from a shift lever position sensor 90 for detecting the position of the shift lever 53, the signal of a vehicle speed ***VSP*** (namely, the rotation speed of the secondary pulley), the signal from the accelerator pedal sensor 54, the signal from an oil temperature sensor 55, and the oil pressure signals from the oil pressure sensors 45a, 45b, and determines the desired speed ratio based on these signals and the actual speed ratio. Furthermore, the controller 50 calculates the desired pressure of the primary pressure and secondary pressure for achieving the desired speed ratio, and controls a pressure regulating valve (not shown) to adjust the oil pressure supplied to the primary pulley 41 and the secondary pulley 42 to achieve the desired pressure.

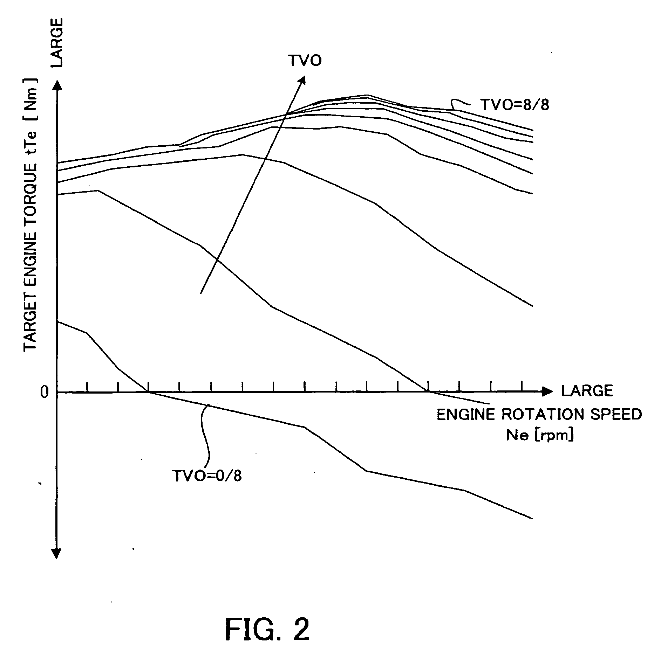

Fig. 2 is a map showing the relationship between the engine rotation speed and engine torque at each quantity of throttle valve opening ***TVO.*** The controller 50 stores the map in Fig. 2 in the ROM of the microcomputer 80. Referring to the map, the microcomputer 80 can calculate the target engine torque ***tTe*** based on the accelerator pedal travel **TVO** and the engine rotation speed ***Ne.***

When the temperature of the oil supplied to the forward-reverse switching apparatus 30 and transmission 40 rises from a very low temperature and exceeds a predetermined temperature, the controller 50 gradually limits the engine output.

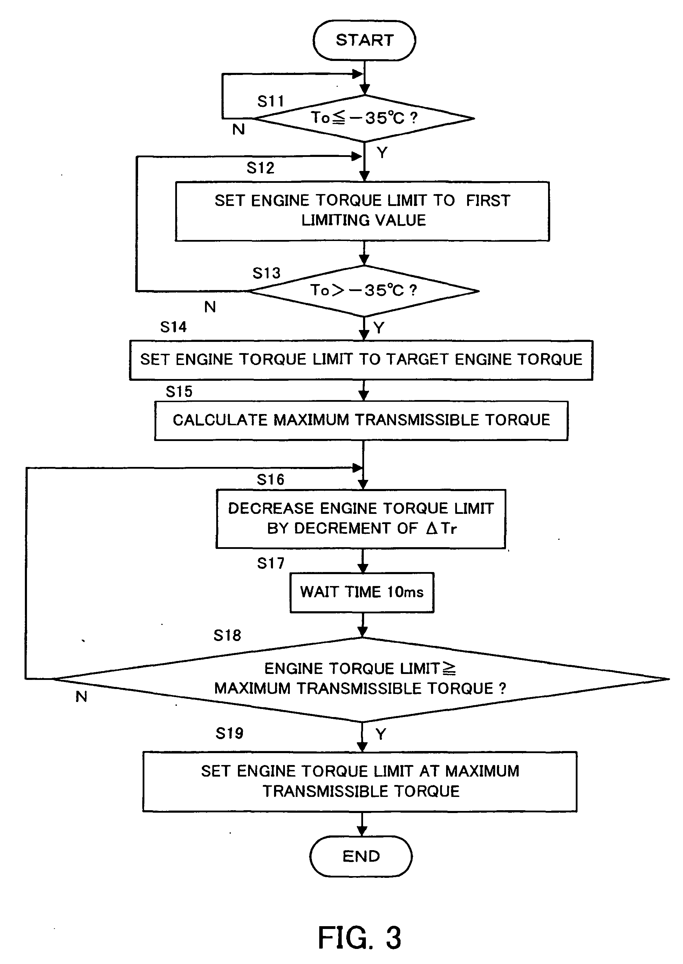

Referring to the flowchart shown in Fig. 3, a control routine implemented by the controller 50 for limiting the output torque of the engine will be described. This control routine is executed repeatedly.

In a step S11, a determination is made as to whether or not an oil temperature ***To*** obtained from the oil temperature sensor 55 is equal to or lower than a predetermined temperature of -35°C. If the determination is affirmative, the routine advances to a step S12. It should be noted that the reason for setting the predetermined temperature at -35°C here is that oil viscosity is extremely high at temperatures of -35°C or below. The predetermined temperature is dependent on the oil type.

In the step S12, the engine torque limit ***Tl*** is set at a first limiting value such that the original engine torque to be output by the engine is not limited. The first limiting value is higher than the maximum output torque of the engine 60, and is preferably substantially equal to the maximum output torque of the engine 60. Here, the engine 60 outputs a target engine torque ***tTe,*** calculated from the current engine rotation speed ***Ne*** and accelerator pedal travel ***TVO*** with reference to FIG. 2, without limitation.

In a step S13, a determination is made as to whether or not the oil temperature ***To*** is greater than -35°C. If the determination is negative, the routine returns to the step S12 and the engine torque limit ***Tl*** is maintained at the first limiting value. If the oil temperature ***To*** is greater than -35°C, the routine advances to a step S14.

In the step S14, the engine torque limit ***Tl*** is set to the target engine torque ***tTe*** which is calculated from the throttle valve opening and engine rotation speed with reference to FIG. 2. For example, the target engine torque ***tTe*** is 300Nm. Here the engine torque limit ***Tl*** suddenly falls to the target engine torque ***tTe**,* but a shock does not occur because there is no change in the real engine torque.

In a step S15, a maximum transmissible torque of the transmission 40 (CVT) is calculated as a second limiting value from the actual oil pressure and gear ratio and so on.

In a step S16, the engine torque limit ***Tl*** is reduced by a decrement **Δ*Tr*** (for example 2 Nm). Next, in a step S17, the wait time ***tw*** is set at a predetermined short time of 10 milliseconds (msec) and the routine ceases to advance for the wait period ***tw.***

In a step S18, a determination is made as to whether or not the engine torque limit ***Tl*** is equal to or less than the second limiting value (maximum transmittable torque). If the determination is negative, the routine returns to the step S16 and the engine torque limit ***Tl*** continues to gradually decrease. By repeating the steps S16 and S17, the engine torque limit ***Tl*** decreases at a predetermined reduction rate (for example 200 Nm/sec).

If the engine torque limit ***Tl*** is equal to or less than the second limiting value, the engine torque limit stops decreasing and the routine advances to a step S19.

In the step S19, the engine torque limit ***Tl*** is set to the second limiting value and then an engine torque lower than the second limiting value is realized by adjusting at least one of the amount of fuel injected by the fuel injection device, the opening of the throttle valve, and the ignition timing of the ignition device.

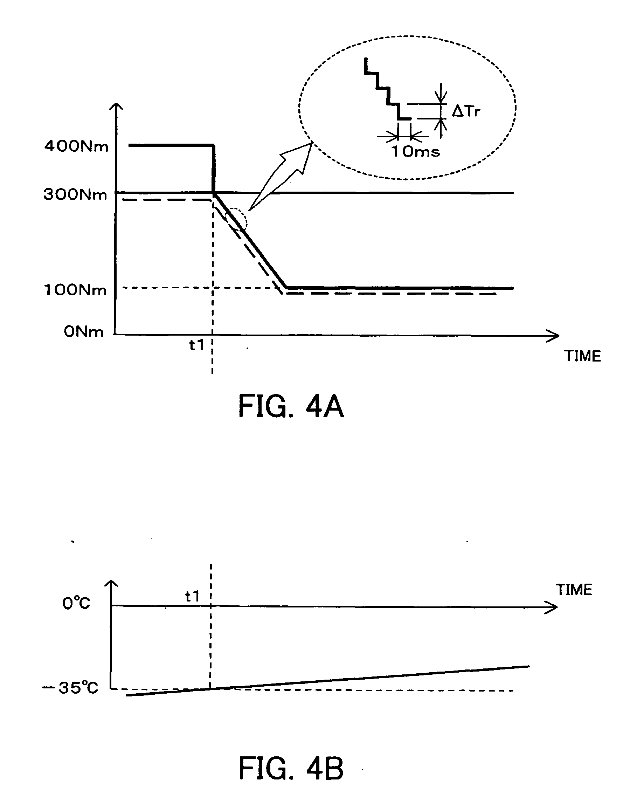

Referring to FIG. 4A, the effects of the first embodiment will be described. FIG. 4A shows the temporal variation in engine torque limit ***Tl*** from the time of engine start-up and temporal variation in input torque from the engine to the transmission system. A bold solid line shows the engine torque limit ***Tl*** and a broken line shows input torque from the engine. The target engine torque ***tTe*** is shown by a thin solid line. A part of the graph which illustrates decreases in the engine torque limit ***Tl*** has been expanded. FIG. 4B shows temporal variation in the oil temperature.

Up to a time t1, the oil temperature is below -35°C (see FIG. 4B). Below -35°C, the engine torque limit ***Tl*** is set to the first limiting value (for example 400Nm) in order to remove limitations on the engine torque. The first limiting value is greater than the maximum output torque of the engine 60. In this case, an engine torque which is determined from the engine rotation speed and accelerator pedal travel TVO on the basis of FIG. 2 is output to the transmission system.

As shown by the expanded view in FIG. 4A, once the oil temperature has exceeded -35°C at the time t1, the engine torque limit ***Tl*** is immediately lowered to the target engine torque ***tTe*** (in this case 300Nm). Thereafter, the engine torque limit ***Tl*** is reduced by the predetermined value **Δ*Tr*** every 10msec. Accordingly, the input torque from the engine gradually decreases as shown by the broken line in FIG. 4A.

Once the engine torque limit ***Tl*** has reached the second limiting value, the engine torque limit ***Tl*** is maintained at the second limiting value. The second limiting value is the maximum transmissible torque at which the transmission 40 does not cause the belt to slip (in this case 100Nm). Hence, since the input torque from the engine to the transmission system is smaller than- the maximum transmissible torque, belt slippage does not occur.

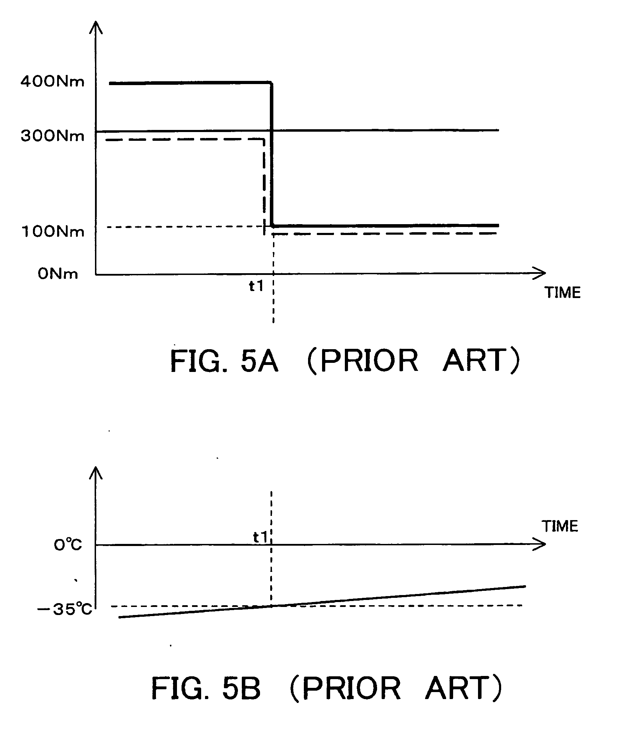

Referring to FIGs. 5A and 5B, temporal variation in the engine torque limit ***Tl*** and temporal variation in the engine torque according to the prior art will be described. Note that each of the lines is similar to those of FIG. 4, the bold solid line, broken line, and thin solid line indicating the engine torque limit ***Tl,*** torque outputted from the engine, and target engine torque ***tTe*** respectively.

In the prior art, when oil at an extremely low temperature exceeds a predetermined temperature (here, -35°C) (time t1), the engine torque is immediately reduced as shown by the broken line in FIG. 5A, according to a sudden decrease of the engine torque limit ***Tl*** to a value (100 Nm) smaller than the target engine torque (300 Nm). The engine torque limit decreases discontinuously from the first limiting value (for example, 400 Nm) to the second limiting value (for example, 100 Nm) and the decrease rate of the engine torque limit is infinite. Such a sudden decrease in torque may cause a large shock.

According to this embodiment, however, the engine torque limit ***Tl*** is gradually lowered as shown in FIG. 4, and since the engine torque decreases in accordance with the engine torque limit, shock can be reduced. In short, a deterioration in drivability can be avoided.

When the oil temperature exceeds the predetermined temperature (here, -35°C), the engine torque limit ***Tl*** is immediately lowered to a target engine torque value which is determined from the accelerator opening and engine rotation speed, and thus rapid engine torque control is possible.

In a second embodiment, steps S21 and S22 are inserted between the steps S15 and S16 in FIG. 3 of the first embodiment.

In the step S21, the vehicle speed ***VSP*** is read. Here, the rotation speed of the secondary pulley is read as an indicator of the vehicle speed ***VSP*** from the secondary pulley rotation speed sensor 52 because it is substantially proportional to the vehicle speed ***VSP.*** Namely, the vehicle speed ***VSP*** is determined from the rotation speed of the secondary pulley.

In the step S22, the engine torque limit decrement ***ΔTr*** is set in accordance with the vehicle speed ***VSP.*** Here, the decrement ***ΔTr*** increases in accordance with increases in the vehicle speed ***VSP.*** Accordingly, the engine torque limit reduction rate increases in accordance with increases in the vehicle speed ***VSP.*** Conversely, the engine torque limit reduction rate decreases as the vehicle speed ***VSP*** decreases.

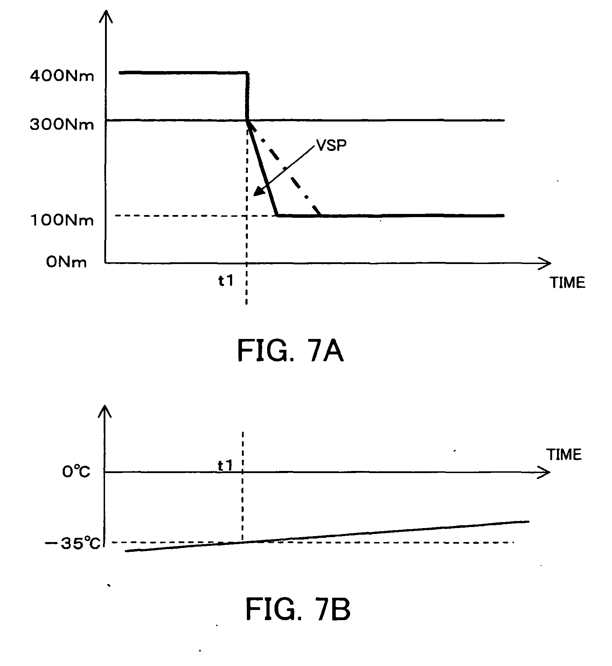

In the second embodiment, the reduction rate of the engine torque limit ***Tl*** is high when the vehicle speed ***VSP*** is high, as shown in FIG. 7A (that is, the inclination in FIG. 7A is sharp). When the vehicle speed ***VSP*** is low, the reduction rate of the engine torque limit ***Tl*** is low (that is, the inclination in FIG. 7A is gentle). When the vehicle speed ***VSP*** is high, a driver is unlikely to sense a reduction in speed even when a decrease in torque occurs, yet when a decrease in torque occurs at a low vehicle speed ***VSP,*** the driver is likely to sense a reduction in speed. Hence the engine torque limit ***Tl*** is determined in response to the vehicle speed ***VSP*** as described above.

According to this embodiment, the engine torque limit reduction rate is varied in accordance with the vehicle speed ***VSP,*** and hence more natural, smoother driving is possible.

The entire contents of Japanese Patent Application P2002-254059 (filed August 30, 2002) are incorporated herein by reference.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. An engine torque control apparatus for controlling an output torque of an engine (60) which is connected to a belt continuously variable transmission (40) of a vehicle, comprising:
a temperature sensor (55) for detecting a temperature of oil supplied to the transmission; and
a controller (50) for limiting the output torque of the engine (60) to an engine torque limiting value or less, the controller (50) being linked to the temperature sensor (55);
wherein the controller (50) functions to:
compare the oil temperature with a predetermined temperature; and
set the engine torque limiting value to a first limiting value when the oil temperature is equal to or lower than the predetermined temperature; **characterized in that**:
the controller (50) functions to decrease the engine torque limiting value at a predetermined reduction rate, stepwise in every predetermined time, until the engine torque limiting value becomes equal to or less than the second limiting value, when the oil temperature is higher than the predetermined temperature;
the second limiting value is the maximum transmissible torque of the belt continuously variable transmission; and
the predetermined temperature is an extremely low temperature at which the viscosity of the oil is too high to perform control of the transmission gear ratio.

2. The engine torque control apparatus as defined in of Claim 1, wherein the controller (50) functions to set the engine torque limiting value to a target engine torque as soon as the oil temperature exceeds the predetermined temperature and subsequently decreases the engine torque limiting value at the predetermined reduction rate.

3. The engine torque control apparatus as defined in Claim 1 or Claim 2, wherein the first limiting value is higher than a maximum output torque of the engine (60).

4. The engine torque control apparatus as defined in any one of Claim 1 through Claim 3, further comprising a sensor (52) for detecting a vehicle speed,
wherein the controller (50) increases the value of a predetermined reduction rate in accordance with increases in the detected vehicle speed.

5. The engine torque control apparatus as defined in any one of Claim 1 through Claim 4, wherein the predetermined temperature dependents upon the oil type.

6. The engine torque control apparatus as defined in any one of Claim 1 through Claim 5, wherein the controller (50) comprises a microcomputer (80) coupled to the temperature sensor (55), a fuel injection device (61) for injecting fuel into the engine (60), a throttle valve (63) for controlling an amount of intake air into the engine (60), and an ignition device (65) for igniting the fuel, and
the controller (50) limits the engine torque to or below the engine torque limiting value by adjusting at least one of a fuel injection amount of the fuel injection device (61), an opening of the throttle valve (63), and an ignition timing of the ignition device (65).

7. A control method for controlling an output torque of an engine (60) which is connected to a belt continuously variable transmission (40) of a vehicle, comprising the steps of:
detecting a temperature of oil supplied to the transmission (40);
comparing the oil temperature with a predetermined temperature;
setting the engine torque limiting value to a first limiting value when the oil temperature is equal to or lower than the predetermined temperature;
; and
limiting the output torque of the engine (60) to the engine torque limiting value or less;
**characterized by**
decreasing the engine torque limiting value at a predetermined reduction rate, stepwise in every predetermined time, until the engine torque limiting value becomes equal to or less than the second limiting value, when the oil temperature is higher than the predetermined temperature;
further **characterized in that**:
the second limiting value is the maximum transmissible torque of the belt continuously variable transmission; and
the predetermined temperature is an extremely low temperature at which the viscosity of the oil is too extremely high to perform control of the transmission gear ratio.

## Patentansprüche

1. Motordrehmoment-Steuerungsvorrichtung zum Steuern eines Ausgangsdrehmoments eines Motors (60), der mit einem stufenlosen Riemen-Automatikgetriebe (40) eines Fahrzeugs verbunden ist, umfassend:
einen Temperatursensor (55) zum Erfassen einer Temperatur eines dem Getriebe zugeführten Öls; und
eine Steuereinheit (50) zum Begrenzen des Ausgangsdrehmoments des Motors (60) auf einen Motordrehmoment-Begrenzungswert oder darunter, wobei die Steuereinheit (50) mit dem Temperatursensor (55) verbunden ist:
wobei die Steuereinheit (50) dazu dient, um:
die Öltemperatur mit einer vorgegebenen Temperatur zu vergleichen; und
den Motordrehmoment-Begrenzungswert auf einen ersten Begrenzungswert einzustellen, wenn die Öltemperatur gleich hoch oder höher als die vorgegebene Temperatur ist;
**dadurch gekennzeichnet, dass**:
die Steuereinheit (50) dazu dient, um den Motordrehmoment-Begrenzungswert mit einer vorgegebenen Reduzierungsrate schrittweise in einer jeweils vorgegebenen Zeit zu reduzieren, bis der Motordrehmoment-Begrenzungswert gleich hoch oder niedriger als der zweite Begrenzungswert wird, wenn die Öltemperatur höher als die vorgegebene Temperatur ist;
wobei der zweite Begrenzungswert das maximal übertragbare Drehmoment des stufenlosen Riemen-Automatikgetriebes ist; und
die vorgegebene Temperatur eine extrem niedrige Temperatur ist, bei der die Viskosität des Öls zu hoch ist, um eine Steuerung des Getriebe-Übersetzungsverhältnisses durchzuführen.

2. Motordrehmoment-Steuerungsvorrichtung nach Anspruch 1, wobei die Steuereinheit (50) dazu dient, um den Motordrehmoment-Begrenzungswert auf ein Ziel-Motordrehmoment einzustellen, sobald die Öltemperatur die vorgegebene Temperatur überschreitet, und anschließend den Motordrehmoment-Begrenzungswert mit der vorgegebenen Reduzierungsrate reduziert.

3. Motordrehmoment-Steuerungsvorrichtung nach Anspruch 1 oder 2, wobei der erste Begrenzungswert höher als ein maximales Ausgangsdrehmoment des Motors (60) ist.

4. Motordrehmoment-Steuerungsvorrichtung nach einem der Ansprüche 1 bis 3, die ferner einen Sensor (52) zum Erfassen einer Fahrzeuggeschwindigkeit umfasst,
wobei die Steuereinheit (50) den Wert einer vorgegebenen Reduzierungsrate gemäß Anstiegen der erfassten Fahrzeuggeschwindigkeit erhöht.

5. Motordrehmoment-Steuerungsvorrichtung nach einem der Ansprüche 1 bis 4, wobei die vorgegebene Temperatur vom Öl-Typ abhängt.

6. Motordrehmoment-Steuerungsvorrichtung nach einem der Ansprüche 1 bis 5, wobei die Steuereinheit (50) einen Mikrocomputer (80), der mit dem Temperatursensor (55) gekoppelt ist, eine Kraftstoff-Einspritzvorrichtung (61) zum Einspritzen von Kraftstoff in den Motor (60), ein Drosselventil (63) zum Steuern einer Ansaugluftmenge in den Motor (60) und eine Zündungsvorrichtung (65) aufweist, um den Kraftstoff zu zünden, und
die Steuereinheit (50) das Motordrehmoment auf oder unter den Motordrehmoment-Begrenzungswert durch Einstellen einer KraftstoffEinspritzmenge der Kraftstoff-Einspritzvorrichtung, einer Öffnung des Drosselventils (63) und/oder eines Zündzeitpunkts der Zündungsvorrichtung (65) begrenzt.

7. Steuerungsverfahren zum Steuern eines Ausgangsdrehmoments eines Motors (60), der mit einem stufenlosen Riemen-Automatikgetriebe eines Fahrzeugs verbunden ist, das folgende Schritte aufweist:
Erfassen einer Temperatur eines dem Getriebe (40) zugeführten Öls;
Vergleichen der Öltemperatur mit einer vorgegebenen Temperatur;
Einstellen des Motordrehmomentwert-Begrenzungswerts auf einen ersten Begrenzungswert, wenn die Öltemperatur gleich hoch oder niedriger als die vorgegebene Temperatur ist; und
Begrenzen des Ausgangsdrehmoments des Motors (60) auf den Motordrehmoment-Begrenzungswert oder darunter;
**gekennzeichnet durch**
Reduzieren des Motordrehmomentwert-Begrenzungswerts mit einer vorgegebenen Reduzierungsrate, schrittweise in einer jeweils vorgegebenen Zeit, bis der Motordrehmoment-Begrenzungswert gleichhoch oder niedriger als der zweite Begrenzungswert wird, wenn die Öltemperatur höher als die vorgegebene Temperatur ist;
ferner **dadurch** gekennzeichnet, dass:
der zweite Begrenzungswert das maximal übertragbare Drehmoment des stufenlosen Riemen-Automatikgetriebes ist; und
die vorgegebene Temperatur eine extrem niedrige Temperatur ist, bei der die Viskosität des Öls viel zu hoch ist, um eine Steuerung des Getriebe-Übersetzungsverhältnisses durchzuführen.

## Revendications

1. Système de commande du couple de moteur pour commander un couple de sortie d'un moteur (60) qui est raccordé à une transmission à variation continue à courroie (40) d'un véhicule, comprenant :
un capteur de température (55) pour détecter une température de l'huile amenée à la transmission ; et
un organe de commande (50) pour limiter le couple de sortie du moteur (60) à une valeur de limite de couple de moteur ou inférieure, l'organe de commande (50) étant relié au capteur de température (55) ;
dans lequel l'organe de commande (50) fonctionne pour :
comparer la température de l'huile avec une température prédéterminée ; et
régler la valeur de limite de couple de moteur à une première valeur de limite lorsque la température de l'huile est égale ou inférieure à la température prédéterminée ; **caractérisé en ce que** :
l'organe de commande (50) fonctionne pour diminuer la valeur de limite de couple de moteur à un taux de réduction prédéterminé, par palier à tous les moments prédéterminés, jusqu'à ce que la valeur de limite de couple de moteur devienne égale ou inférieure à une seconde valeur de limite, lorsque la température de l'huile est supérieure à la température prédéterminée ;
la seconde valeur de limite est le couple transmissible maximum de la transmission à variation continue à courroie ; et
la température prédéterminée est une température extrêmement basse à laquelle la viscosité de l'huile est trop élevée pour réaliser la commande du rapport de vitesse de la transmission.

2. Système de commande du couple de moteur selon la revendication 1, dans lequel l'organe de commande (50) fonctionne pour régler la valeur de limite de couple de moteur sur un couple de moteur cible dès que la température de l'huile dépasse la température prédéterminée et diminue ensuite la valeur de limite de couple de moteur au taux de réduction prédéterminé.

3. Système de commande du couple de moteur selon la revendication 1 ou la revendication 2, dans lequel la première valeur de limite est supérieure à un couple de sortie maximum du moteur (60).

4. Système de commande du couple de moteur selon l'une quelconque des revendications 1 à 3, comprenant en outre un capteur (52) pour détecter une vitesse de véhicule,
dans lequel l'organe de commande (50) augmente la valeur d'un taux de réduction prédéterminé selon les augmentations de la vitesse de véhicule détectée.

5. Système de commande du couple de moteur selon l'une quelconque des revendications 1 à 4, dans lequel la température prédéterminée dépend du type d'huile.

6. Système de commande du couple de moteur selon l'une quelconque des revendications 1 à 5, dans lequel l'organe de commande (50) comprend un microordinateur (80) couplé au capteur de température (55), un dispositif d'injection de carburant (61) pour injecter le carburant dans le moteur (60), un papillon des gaz (63) pour contrôler une quantité d'air d'admission dans le moteur (60), et un dispositif d'allumage (65) pour enflammer le carburant, et
l'organe de commande (50) limite le couple de moteur à ou au-dessous de la valeur de limite de couple de moteur en ajustant au moins l'un parmi une quantité d'injection de carburant du dispositif d'injection de carburant (61), une ouverture du papillon des gaz (63) et un réglage d'allumage du dispositif d'allumage (65).

7. Procédé de commande pour commander un couple de sortie d'un moteur (60) qui est raccordé à une transmission à variation continue à courroie (40) d'un véhicule, comprenant les étapes consistant à :
détecter une température de l'huile amenée à la transmission (40) ;
comparer la température de l'huile avec une température prédéterminée ;
régler la valeur de limite de couple de moteur sur une première valeur de limite lorsque la température de l'huile est égale ou inférieure à la température prédéterminée ; et
limiter le couple de sortie du moteur (60) à la valeur de limite de couple de moteur ou une valeur inférieure ;
**caractérisé par** l'étape consistant à :
diminuer la valeur de limite de couple de moteur à un taux de réduction prédéterminé, par palier à tous les moments prédéterminés, jusqu'à ce que la valeur de limite de couple de moteur devienne égale ou inférieure à la seconde valeur de limite, lorsque la température de l'huile est supérieure à la température prédéterminée ;
**caractérisé en outre en ce que** :
la seconde valeur de limite est le couple transmissible maximum de la transmission à variation continue à courroie ; et
la température prédéterminée est une température extrêmement basse à laquelle la viscosité de l'huile est trop élevée pour réaliser la commande du rapport de vitesse de transmission.
